# EUROPÄISCHE PATENTSCHRIFT

(11) **EP 3 327 424 B1**
(45) Veröffentlichungstag und Bekanntmachung des Hinweises auf die Patenterteilung: **26.12.2018**
(21) Anmeldenummer: 16200692.8
(22) Anmeldetag: 25.11.2016
(51) Int. Cl.: G01N 21/3554, E04F 13/16, E04F 15/10, G01N 21/3563, G01N 21/359, B32B 21/00, B32B 27/00, B32B 29/00, G01N 35/00, G01N 21/84, F26B 13/00, F26B 25/22, B29C 70/50, D06M 15/423, D21H 17/51, B32B 29/06

(54) **VERFAHREN ZUR BESTIMMUNG DES VERNETZUNGSGRADES VON MINDESTENS EINER AUF EINER TRÄGERPLATTE VORGESEHEN HARZSCHICHT**
METHOD FOR DETERMINING THE CURING LEVEL OF AT LEAST ONE RESIN LAYER ARRANGED ON A SUPPORT PLATE
PROCÉDÉ DE DÉTERMINATION DU DEGRÉ DE RÉTICULATION D'AU MOINS UNE COUCHE DE RÉSINE DISPOSÉE SUR UNE PLAQUE SUPPORT

(43) Veröffentlichungstag der Anmeldung: 30.05.2018
(73) Patentinhaber: Flooring Technologies Ltd., Kalkara SCM1001 (MT)
(72) Erfinder: DR. KALWA, Norbert, 32805 Horn-Bad Meinberg (DE); DENK, Andre, 16909 Wittstock/Dosse (DE)
(74) Vertreter: Maikowski & Ninnemann Patentanwälte Partnerschaft mbB

(56) Entgegenhaltungen:
- EP-A1- 2 808 636
- US-A- 5 457 319
- Tom Scherzer ET AL: "Process Control of UV and EB Curing of Acrylates by In-line NIR Reflection Spectroscopy", 2004 UV & EB Technical Conference Proceedings, 30. April 2004 (2004-04-30), Seiten 1-11, XP055310210, Gefunden im Internet: URL:http://www.radtechmembers.org/archive- proceedings/2004/papers/064.pdf [gefunden am 2016-10-12]

## Beschreibung

Die vorliegende Erfindung betrifft ein Verfahren zur Bestimmung des Vernetzungsgrades von mindestens einer auf einer Trägerplatte vorgesehenen Harzschicht nach Anspruch.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, z.B. in Form von Laminatböden, bekannt. Derartige Werkstoffplatten werden üblicherweise aus Holzfasern, Holzspänen oder Strands hergestellt.
Für den Einsatz von derartigen Werkstoffplatten z.B. als Laminatböden oder Wandpaneele ist eine Weiterveredlung der Holzwerkstoffplatten vorteilhaft und notwendig. Im Falle von Laminatböden werden z.B. aus Holzfasern hergestellte HDF-Platten mit vielfältigen Dekoren versehen.
Hierzu können dekorative harzimprägnierte Papiere auf die Oberfläche der Werkstoffplatte aufgepresst werden oder Schichtstoffe, die zunächst aus mehreren harzimprägnierten Papieren zu einem Laminat verpresst werden, auf einen Holzwerkstoff aufzukleben. Auch können Dekore im Direktdruck auf die Holzwerkstoffplatte aufgebracht werden, die anschließend mit einem Harz oder Lack versiegelt werden.
Die harzimprägnierten Papiere werden durch Tränken der Papierlagen in wasserhaltigen Kunstharzen auf Imprägnierkanälen mit anschließender Trocknung in einem Trockenkanal erhalten. Die Imprägnate enthalten nach dem Tränkprozess eine definierte Menge an Harz und eine definierte Restfeuchte.
Das Hauptanwendungsgebiet für Imprägnate ist dabei die Erzeugung von dekorativen Oberflächen. Weitere Anwendungen für imprägnierte Papiere sind der Verschleißschutz, die Armierung und die Gewährleistung von Verzugsfreiheit (Spannungssymmetrie). Je nach Anwendung werden unterschiedliche Papiere und Harze eingesetzt. Handelt es sich beispielsweise um die Erzeugung einer dekorativen Oberfläche, so werden bedruckte Dekorpapiere verwendet, die mit Melamin- und/oder Harnstoffharzen imprägniert sind und bis auf eine definierte Restfeuchte getrocknet worden sind. Für den Verschleißschutz werden sogenannte Overlays (α-cellulosehaltige Papiere) verwendet, die ebenfalls mit Melamin- und/oder Harnstoffharz imprägniert und ebenfalls auf eine definierte Restfeuchte getrocknet. Zu Armierungszwecken werden meist mit Phenolharz imprägnierte Natronkraftpapiere eingesetzt. Diese werden bei der Herstellung von Laminaten oder Compactplatten als sogenannte Kernlage verwendet. Bei Imprägnaten zur Gewährleistung der Spannungssymmetrie bei beschichteten Platten, werden üblicherweise Recyclingpapiere eingesetzt, die mit allen drei genannten Harzsystemen oder Gemischen aus ihnen imprägniert sein können. Selbstverständlich müssen die Papiere für den jeweiligen Anwendungsfall einen definierten Harzauftrag besitzen. Dieser soll zum einen die Funktion gewährleisten und zum anderen möglichst unnötige Kosten vermeiden.

Unabhängig vom Verwendungszweck müssen alle Imprägnate den bereits erwähnten Restfeuchtgehalt besitzen. Dieser ermöglicht unabhängig von der Art der Weiterverarbeitung (Kurztakt-, Conti- oder Mehretagenpresse) das Entstehen von qualitativ einwandfreien Produkten. Die Restfeuchte ist ein Indiz für den Vernetzungsgrad der eingesetzten Kunstharze.

Die zur Imprägnierung von Papierlagen oder auch zur Direktbeschichtung von anderen Trägerplatten verwendeten Harze durchlaufen in diesen Prozessen verschiedene Polymerations- und Vernetzungszustände.

Dies sei im Folgenden anhand des häufig in der Holzwerkstoffplatten-Herstellung zum Einsatz kommenden Melamin-Formaldehyd-Harzes dargestellt.

Melamin und Formaldehyd reagieren zunächst unter Ausbildung von Methylolgruppen an den Aminogruppen des Melamins zu wasserlöslichen Produkten (siehe Schema I).

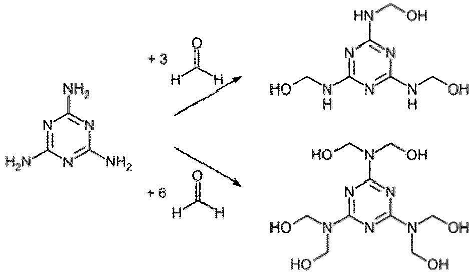

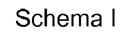

Diese Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

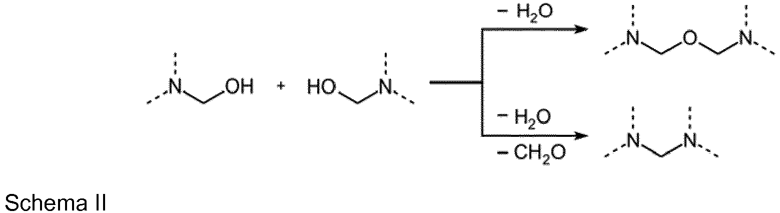

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

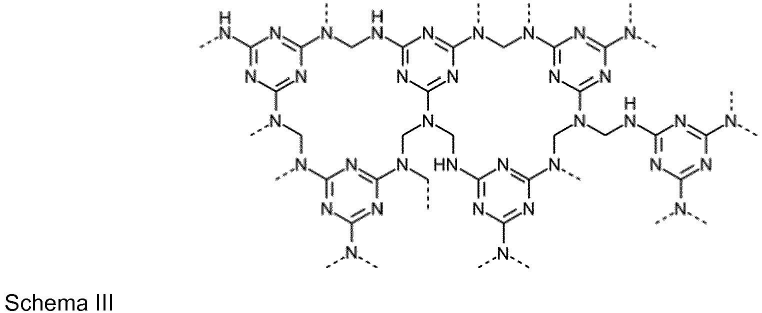

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Im Falle der Verwendung von imprägnierten Papierlagen zur Veredlung von Holzwerkstoffplatten z.B. zu hochwertigeren Fußbodenpaneelen ist es wünschenswert, dass das Imprägnierharz noch nicht vollständig ausgehärtet ist, sondern sich bevorzugt noch im teilvernetzten B-Zustand befindet. Dies ermöglicht bei der Weiterverarbeitung in der Presse noch ein Fließen/Verfilmen in Kombination mit der Weitervernetzung der Kunstharze.

Die Bestimmung des teilvernetzten, noch teilweise löslichen B-Zustandes erfolgt bisher über eine Bestimmung der Restfeuchte einer Probe durch Trocknen in einem Ofen (105°C, 5 min). Bei dieser Art der Qualitätsbestimmung wird nicht nur Wasser sondern auch zu einem geringen Anteil Formaldehyd aus den Kunstharzen abgespalten. Es handelt sich bei dieser so genannten VC-Bestimmung (VC = volatile compounds) also um die Bestimmung eines Summenparameters. Die Feuchten von Imprägnaten liegen üblicherweise bei 5 - 7 Gew.% abhängig vom Verwendungszweck. Die Bestimmung der Restfeuchte ist neben der Bestimmung des Harzauftrages die einzige relevante Qualitätsprüfung, die an einem Imprägnierkanal durchgeführt wird.

Bei dieser Technologie ergeben sich nun einige Probleme, die zu mangelhaften Produkten oder sogar zu Ausschuss führen können. Die oben beschriebene Vernetzungsreaktion (Prekondensation), die nur in der Presse ablaufen sollte, wird durch Säuren katalysiert, die den Kunstharzen bei der Imprägnierung beigemischt sind. Es kann nun im Imprägnierprozess durch eine falsche Temperaturführung im Trockner zunächst zu einer Übertrocknung der Papiere kommen, die im Anschluss durch eine Rückbefeuchtung kompensiert wird. Eine Bestimmung der Restfeuchte liefert Werte am unteren Ende des erlaubten Bereiches, sodass die Imprägnate als qualitativ einwandfrei beurteilt werden. Bei der Weiterverarbeitung wird später festgestellt, dass die Imprägnate je nach Einsatzzweck wegen der Übertrocknung (verbunden mit einer zu starken Vernetzung) zu Haftungs- und Transparenzstörungen, Blasenbildung usw. führen. Damit kann also eine Feuchtebestimmung, die sich nur an der Restfeuchte orientiert falsche Ergebnisse liefern. Dies wird so z. B. in der DE 10 2015 105039 beschrieben. Dort wird erläutert, dass über NIR (Nahinfrarot) die Aushärtung indirekt über die Feuchte bestimmt werden kann.

Ein ebenfalls häufig auftretendes Problem ist die Überlagerung von Imprägnaten. Durch die in den Imprägnaten befindliche Säure tritt selbst bei Raumtemperatur eine langsame Weitervernetzung auf. Diese führt ebenfalls dazu, dass die Imprägnate nicht mehr eingesetzt werden können, da sie zu ähnlichen Qualitätsmängeln führen wie die übertrockneten Imprägnate. Auch hier ist durch eine Prüfung auf die Restfeuchte kein Qualitätsmangel feststellbar, da sich die Feuchte im verpackten Imprägnatstapel während der Nachhärtung nicht ändert bzw. die oben genannte Prüfung bei einwandfreien oder nachgehärteten Imprägnaten keinen Unterschied zeigt. Der Mangel kann erst durch eine Probeverpressung der Imprägnate festgestellt werden. Dies ist aufwändig und gibt bei einer einzelnen Probe keine schnelle Aussage über eine ganze Palette an Imprägnaten. Im Zweifelsfall wird eine ganze Palette verschrottet, obwohl noch ein Teil der Imprägnate einsetzbar gewesen wären.

Der Grund für die Qualitätsmängel liegt daran, das sich die Kunstharze in beiden Fällen schon nicht mehr im B- Zustand (Teilvernetzung) sondern im oder nahe am C-Zustand (vollständige Vernetzung) befinden. In diesem Zustand haben nahezu alle in den verschiedenen Kunstharzen befindlichen Methylolgruppen unter Wasser- bzw. Formaldehydabspaltung zu Ether- bzw. Methylenbrücken abreagiert. Damit ist in einer Presse kein Fließen und Nachvernetzen der Kunstharze mehr möglich.

Eine einfache - wenn möglich zerstörungsfreie Prüfung - ist bisher nicht bekannt, sodass durch diese Problem erhebliche Schäden auftreten. Selbst die Entsorgung von Imprägnaten ist für viele Betriebe nicht unproblematisch, da die einfachste Möglichkeit der Entsorgung, nämlich die Verbrennung, nicht jedem Betrieb zur Verfügung steht. Auch sind die finanziellen Verluste nicht zu unterschätzen. Eine Palette (1000 Stück, Format: 5,2 x 2,07 m) mit imprägnierten Dekorpapieren kann einen Wert von mehreren tausend Euro besitzen. Der Grund für das Auftreten des Problems ist, das die Imprägnierung der Papiere nicht Auftrags bezogen erfolgt, sondern häufig in viel größeren Stückzahlen. Man möchte dadurch Kosten reduzieren, die bei kleineren Losgrößen stärker zu Buche schlagen (Anfahrverluste, Stillstände durch Auftragswechsel usw.).

Aus den bisherigen Ausführungen ist erkennbar, dass es derzeit keine verlässliche Methode zur Bestimmung des Vernetzungsgrades von bereits vorgehärteten und teilweise vernetzten Harzschichten in Imprägnaten oder auch auf anderen Trägerplatten gibt. Vielmehr ist der bisherige Ansatz der Restfeuchtebestimmung durch VC nicht geeignet, den Vernetzungsgrad zu bestimmen. Daraus ergeben sich eine erhebliche Nachteile: keine schnelle Qualitätsbestimmung, Prozessunsicherheit, höhere Kosten, Qualitätsmängel in Produkten. In Scherzer und Mehnert, (Process control of UV and EB curing of acrylates by in-line NIR Reflection Spectroscopy, Technical Proceedings, 2004) wird ein Ansatz zur Bestimmung der UV Aushärtung (curing) von Acrylaten mittels NIR Reflektionsspektroskopie beschrieben. Da es sich hier jedoch um Acrylate, und somit um eine andere Polymerklasse handelt, ist dieser Ansatz nicht ohne weiteres für Formaldehyd-Kondensate übertragbar.
Der Erfindung liegt daher die technische Aufgabe zugrunde, ein Verfahren zu entwickeln, das die oben genannten Mängel behebt. Dabei sollte das Verfahren eine Analyse ohne Materialzerstörung oder -verbrauch ermöglichen. Eine Analyse sollte in einer Imprägnieranlage on-line möglich sein. Zur Prüfung von Paletten mit Imprägnaten sollte ein mobiles Verfahren zu Verfügung stehen. Auch die Prüfung der Aushärtung von Harzen auf Holzwerkstoffplatten sollte möglich sein. Ein wesentlicher Punkt sollte eine schnelle Messung inclusive der Datenanalyse sein.

Die gestellte Aufgabe wird erfindungsgemäß durch ein Verfahren mit den Merkmalen des Anspruchs 1 gelöst.

Demnach wird ein Verfahren zur Bestimmung des Vernetzungsgrades von mindestens einer auf einem Trägermaterial vorgesehenen Harzschicht aus wärmehärtbaren Formaldehyd-Harzbereitgestellt, wobei die mindestens eine vorgehärtete Formaldehyd-Harzschicht in einem vorgehärteten Zustand auf der Oberfläche einer Trägerplatte oder als Teil- oder Vollimprägnat einer Papierlage vorliegt. Das vorliegende Verfahren umfasst dabei die folgenden Schritte:
- Aufnehmen von mindestens einem NIR-Spektrum der auf dem mindestens einem Trägermaterial vorgesehenen vorgehärteten Formaldehyd-Harzschicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Vernetzungsgrades der mindestens einen vorgehärteten Formaldehyd-Harzschicht durch Vergleich des für die mindestens eine vorgehärtete Formaldehyd-Harzschicht ermittelten NIR-Spektrums mit mindestens einem für mindestens eine Referenzprobe der mindestens einen Formaldehyd-Harzschicht mit bekanntem Vernetzungsgrades ermittelten NIR-Spektrums mittels einer multivarianten Datenanalyse (MDA), wobei die multivariate Datenanalyse über den gesamten Spektralbereich des ermittelten NIR-Spektrums durchgeführt wird,
wobei das mindestens eine für die mindestens eine Referenzprobe mit einer vorgehärteten Formaldehyd-Harzschicht mit bekannten Vernetzungsgrad ermittelte NIR-Spektrum unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

Das vorliegende Verfahren ermöglicht demnach die Bestimmung des Vernetzungsgrades der auf dem Trägermaterial vorgesehenen vorgehärteten Formaldehyd-Harzschicht, wobei der Vernetzungsgrad bevorzugt dem Vernetzungsgrad eines Harzes entspricht, dessen Aushärtung im Zustand einer unvollständigen Polymerisierung unterbrochen wurde. d.h. sich im B-Zustand befindet. Die zu vermessende vorgehärtete Formaldehyd-Harzschicht ist demnach nicht vollständig ausgetrocknet, sondern befindet sich vielmehr in einem vorgetrockneten oder auch vorgelierten Zustand. In diesem vorgetrockneten Zustand ist das Harz noch fließfähig und kann bei einer weiteren Verarbeitung weiter vernetzt werden. Der vorgehärtete bzw. vorgetrocknete Zustand der Formaldehyd-Harzschicht ermöglicht u.a. das Auftragen von weiteren Funktionsschichten auf die bereits vorliegende Formaldehyd-Harzschicht zu einem späteren Zeitpunkt.

Das vorliegende Verfahren der Bestimmung des Vernetzungsgrades einer auf einem Trägermaterial vorgesehenen vorgehärteten Formaldehyd-Harzschicht unter Verwendung von NIR-Spektroskopie bietet eine Alternative zu den oben beschriebenen zeitaufwendigen und kostenintensiven Prüfungen des VC-Wertes bzw. Restfeuchtewertes. So erfolgt die Bestimmung des Vernetzungsgrades unter Verwendung eines NIR-Messgerätes in weniger als eine Minute, was einen hohen Probendurchsatz ermöglicht. Zudem ist die Messung zerstörungsfrei. Die Messergebnisse werden in elektronischer Form automatisch abgespeichert und stehen für mögliche Weiterwendung zur Verfügung. Des Weiteren können Proben von mehreren Anlagen in kurzer Zeit auf den Aushärtungsgrad geprüft werden. Bei dieser Messung werden in einer Sekunde Dutzende NIR-Messungen durchgeführt, sodass auch eine statistische Absicherung der Werte gewährleistet wird.

Unter Verwendung eines NIR-Detektors wird mit Hilfe der NIR-Strahlung ein NIR-Spektrum der auf dem Trägermaterial vorgesehenen vorgehärteten Harzschicht erzeugt, das für die Harzschicht spezifische Peaks aufweist. Die NIR-Strahlung wird während der Messung auf die zu analysierende Probe geleitet, wo sie mit den Bestandteilen der Probe wechselwirkt und reflektiert oder gestreut wird. Ein NIR-Detektor fängt die reflektierte NIR-Strahlung auf und erzeugt ein NIR-Spektrum, das die chemischen Informationen der Probe beinhaltet. So reflektieren z.B. die in einem Formaldehydharz vorhandenen freien Methylolgruppen das Messsignal anders als die sich während der Aushärtung unter Abspaltung von Wasser oder Formaldehyd bildenden Methylenether oder Methylenbrücken.

Das NIR-Spektrum einer z.B. mit Melamin-Formaldehyd-Harz beschichteten Probe weist eine deutliche breite Absorptionsbande mit einem Absorptionsmaximum bei ca. 1490 nm auf. Diese Bande entspricht der ersten Oberschwingung von N-H-Gruppen. Bei ca. 1450 nm ist eine erste Oberschwingung der O-H-Bindung des Wassers erkennbar. Wegen der Überlappung der genannten Absorptionsbanden erscheint die Wasserbande als linke Schulter der breiten Bande.

Ein Vergleich und die Interpretation der NIR-Spektren erfolgt sinnvollerweise über den gesamten aufgenommenen Spektralbereich. Dies wird mit der multivariaten Datenanalyse MDA durchgeführt. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.

Es ist zwar aus der EP 1750128 A2 bekannt, NIR-Spektroskopie zur Ermittlung des Reifezustandes, insbesondere der Viskosität von duroplastischen Zusammensetzungen, wie SMC-Formmassen, einzusetzen, allerdings muss hier eine Prüfung des Reifezustandes durch eine Abdeckung hindurch (hier Trägerfolie) erfolgen. Zur Herstellung von SMC-Formmassen werden geschnittene Fasern auf eine Trägerfolie in Form eines dünnen Films aufgetragen und anschließend mit duroplastischen Harzen abgedeckt. Nach dem Abdecken dieser Harzschicht mittels einer weiteren Trägerfolie durchläuft diese sandwichartige Anordnung eine Walzenstrecke, in welcher eine Imprägnierung der Fasern und eine Verdichtung des zu erhaltenen Halbzeugs erreicht werden. Mittels NIR-Spektroskopie wird eine zerstörungsfreie Echtzeitmessung der Viskosität der reifenden duroplastischen Zusammensetzung ermöglicht.

Im Gegensatz dazu ist in dem vorliegenden Verfahren die vorgehärtete Formaldehyd-Harzschicht z.B. nicht durch eine Polymerfolie abgedeckt, so dass eine direkte Bestrahlung der vorgehärteten Harzschicht mit NIR-Strahlung erfolgen kann. Vorliegend erfolgt somit keine Prüfung des Vernetzungsgrades eines vorgehärteten Harzes durch eine die vorgehärtete Harzschicht bedeckende Materialschicht wie z.B. eine Polymerfolie Nur so ist eine sinnvolle Auswertung möglich, denn eine Folie hat, je nach Material in verschiedenen Bereichen Absorptionsbanden, die Banden des duroplastischen Harzes überlagern und/oder überdecken können. Dies macht eine Auswertung schwieriger, im ungünstigsten Fall sogar unmöglich. Ohne Folie besteht dieses Problem nicht.

In einer bevorzugten Ausführungsform des vorliegenden Verfahrens umfasst die Referenzprobe mit bekanntem Vernetzungsgrad der vorgehärteten Formaldehyd-Harzschicht eine auf einem Trägermaterial vorgesehene Formaldehyd-Harzschicht, wobei Trägermaterial und Harzschicht der Referenzprobe gleichartig zu der zu vermessenden Probe aus Trägermaterial und Harzschicht sind.

In einer weiteren Ausführungsform des vorliegenden Verfahrens erfolgt die Bestimmung des Vernetzungsgrades der vorgehärteten Harzschicht der mindestens einen Referenzprobe nach dem Vorhärten der Harzschicht anhand von mindestens einer der vorgehärteten Referenzprobe entnommenen Einzelprobe. Dabei ist es bevorzugt, wenn der Vernetzungsgrad der vorgehärteten Harzschicht der Referenzprobe anhand von mindestens einer, bevorzugt mindestens zwei, drei, vier oder mehreren, der Referenzproben entnommenen Einzelproben gemäß dem VC-Test bestimmt wird.

Für den VC-Test wird eine Probe (üblicherweise 10 x 10 cm) gewogen und 5 min bei 105°C getrocknet. Nach dem Abkühlen wird die Probe erneut gewogen. Danach wird ausgehen vom Endgewicht der Masseverlust bestimmt und als Prozentwert angegeben. Das zuvor bestimmte Papiergewicht dient als Basis für die Bestimmung des Harzauftrages in Prozent ((Endgewicht - Papiergewicht / Papiergewicht) x 100).

Die Kalibrierung erfolgt durch Aufnahme eines NIR-Spektrums von einer vorgehärteten Referenzprobe, die anschließend auf die Rechtfeuchte mittels VC-Test geprüft wird. Hierzu werden verschiedene Referenzproben mit unterschiedlich vorgehärteten Harzschichten bereitgestellt, wobei der Grad der Vorhärtung durch unterschiedliche Trocknungszeiten und--temperaturen variiert werden kann.

Auf diese Weise werden mehrere Referenzspektren von unterschiedlich vorgehärteten Proben aufgenommen.

Aus den jeweils ermittelten Werten des Vorhärtungsgrades wird ein Mittelwert gebildet, welcher dem jeweiligen NIR-Spektrum zugeordnet wird. Auf diese Weise werden mehrere Referenzspektren von beschichteten Platten mit farblich unterschiedlichen Dekoren und unterschiedlichen Härtungsgraden aufgenommen. Aus den Referenzspektren wird ein Kalibrationsmodell erstellt, welches zur Bestimmung des Vorhärtungsgrades einer unbekannten Probe genutzt werden kann. Bei der (In-Line oder Off-Line) NIR-Messung wird dann direkt das Ergebnis des VC-Tests bzw. Qualität der Vorhärtung vorhergesagt.

Im vorliegenden Fall erfolgt die multivariate Datenanalyse über das Verfahren der Partial Least Squares (PLS-Regression), wodurch ein geeignetes Kalibrationsmodell erstellt werden kann. Die Auswertung der gewonnenen Daten wird bevorzugt mit einer geeigneten Analysesoftware vorgenommen, wie z.B. mit der Analysesoftware SIMCA-P der Firma Umetrix AB oder The Unscrambler der Firma CAMO. Dieses Programm ermöglicht unter anderem durch speziellen Vorbehandlungstechniken der spektralen Daten verschiedenen Störfaktoren auf die Messung solche wie Oberflächenbeschaffenheit der Proben, infrarot-inaktive Füllstoffe in der Beschichtung oder unterschiedlichen Farben der Proben und weitere, zu minimieren.

Wie angeführt liegt das Trägermaterial in Form einer Trägerplatte oder Papierlage vor. Als Papierlage kommen z.B. Overlaypapiere, Dekorpapiere, oder Kraftpapiere zum Einsatz.

Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

In einer bevorzugten Ausführungsform ist das Trägermaterial teilweise oder vollständig mit dem Harz imprägniert, wobei das Harz in das Trägermaterial eindringt bzw. hinein penetriert. Eine Imprägnierung erfolgt insbesondere bei Verwendung von Papierlagen als Trägermaterial. Vorliegend ist unter dem Begriff der "Imprägnierung" eine vollständige oder teilweise Durchtränkung der Papierlage mit dem Harz zu verstehen. Derartige Imprägnierungen können z.B. in einem Imprägnierbad, durch Walzen, durch Rasterwalzen, durch Aufrakeln oder auch durch Besprühen aufgebracht werden.

In einer weiteren Ausführungsform des vorliegenden Trägermaterials kann auch vorgesehen sein, dass die Harzschicht nicht in das Trägermaterial eindringt, sondern vielmehr auf der Oberfläche des Trägermaterials aufgetragen ist. Dies ist insbesondere im Falle der Verwendung einer Trägerplatte als Trägermaterial der Fall. Hierbei ist das mindestens eine vorgehärtete Harz auf mindestens einer Oberfläche bzw. einer Seite, d.h. Oberseite und/oder Unterseite, der Trägerplatte angeordnet. Als Oberfläche wird dabei ein ein- oder mehrschichtiger Aufbau auf dem Trägermaterial verstanden.

Im Falle einer Trägerplatte als Trägermaterial ist diese bevorzugt eine Platte aus einem Holzwerkstoff, aus Kunststoff, einem Holzwerkstoff-Kunststoff-Gemisch oder einem Verbundwerkstoff, insbesondere eine Span-, mitteldichte Faser (MDF)-, hochdichte Faser (HDF)-, Grobspan (OSB)- oder Sperrholzplatte, eine Zementfaserplatte, Gipsfaserplatte und/oder eine WPC-Platte (wood plastic composites).

Die Oberfläche des Trägermaterials kann oberflächenbehandelt sein, z.B. im Falle einer Holzträgerplatte kann die Oberfläche abgeschliffen sein. Im Falle einer Kunststoffträgerplatte kann die Oberfläche koronabehandelt sein.

Die vorgehärtete Harzschicht kann demnach als Flüssigoverlay auf einer Trägerplatte oder als Teil- oder Vollimprägnat einer Papierlage vorliegen.

Im Falle eines Flüssigoverlays weist die mindestens eine auf einer Trägerplatte vorgesehene vorgehärtete Harzschicht eine Dicke zwischen 10 und 150 µm, bevorzugt zwischen 20 und 100 µm, insbesondere bevorzugt zwischen 30 und 80 µm auf. Dabei kann die Harzschicht mindestens eine Lage, bevorzugt mindestens zwei Lagen, insbesondere bevorzugt mindestens drei nacheinander aufgetragene Lagen umfassen.

Als wärmehärtbares Formaldehyd-Harz kommt bevorzugt ein Melamin-Formaldehyd-Harz, ein Melamin-Harnstoff-Formaldehyd-Harz oder ein Harnstoff-Formaldehyd-Harz zum Einsatz. Als weitere Harze sind Epoxidharze, ein Polyamidharze oder ein Polyurethanharze möglich.

Prinzipiell könnte auch eine vorgehärteten Harzschicht vorgesehen sein, die in Form einer UV-härtbaren und/oder Elektronenstrahl-härtbaren (ESH)-Harzschicht vorliegt. Hierfür sind insbesondere strahlenhärtbare, acrylathaltige Lacke einsetzbar. Typischerweise enthalten die verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureestermonomeren, -oligomeren oder -polymeren enthält.

In einer weitergehenden Variante des vorliegenden Verfahrens ist vorgesehen, dass der Vernetzungsgrad der mindestens einen vorgehärteten Harzschicht innerhalb (in-line) und/oder außerhalb (off-line) einer Produktionslinie des mit der vorgehärteten Harzschicht versehenen Trägermaterials bestimmt wird.

Im Falle der In-Line NIR-Messung in der Produktionslinie wird bevorzugt ein mobiles NIR-Messgerät (wie z.B. das Gerät DA 7400 der Firma Perten) verwendet. Bei der In-Line-Messung kann der Messkopf, der die Spektren aufnimmt dabei an einer beliebigen Stelle in der Produktionslinie positioniert werden. Er liefert pro Imprägnat oder Platte/Laminat usw. mehrere Messwerte. Durch ein Traversieren des Messkopfes über eine Plattenbreite können auch hier Unterschiede detektiert werden.

Im Falle der off-Line NIR-Messung außerhalb der Produktionslinie können sowohl mobile als auch stationäre NIR-Messgeräte (wie z.B. das Gerät DA 7250 der Firma Perten) verwendet werden.

Neben den oben beschriebenen Anwendungen für vorgehärtete Harzschichten im dekorativen Bereich ist es generell vorstellbar und möglich, den Vernetzungsgrad / Trocknungsgrad von Klebstoffen und Leimen (wie Harnstoffleim, Melaminleim) zu bestimmen und zu kontrollieren.

Wie oben bereits erläutert, kann das vorliegende Verfahren für verschiedene Harzsysteme verwendet werden (wie Epoxid, PU, Polyamid usw.), wobei jeweils abhängig vom Harzsystem ein oder mehrere Peaks ausgewählt werden müssen, die eine Aussage über den Zustand der Aushärtung zulassen.

Das vorliegende Verfahren weist eine Vielzahl von Vorteilen auf: on-line-Messung möglich; beliebige Kunstharze sind analysierbar; mobiles und schnelles Messverfahren; Produktionssteuerung möglich.

Die Erfindung wird nachfolgend unter Bezugnahme auf die Figuren der Zeichnungen an einem Ausführungsbeispiel näher erläutert. Es zeigen:
- Figur 1: zwei NIR-Spektrum einer Probe vor und nach einem Trocknungsschritt, und
- Figur 2: NIR-Spektren der Figur 1 nach Korrektur der Basislinienverschiebung.

### Ausführungsbeispiel 1: Erstellen einer Referenzprobe und Kalibrierung

Im Falle von imprägnierten Papieren werden für die die Kalibrierung der NIR-Messung zunächst Imprägnate in verschiedenen Trocknungszuständen mit dem NIR- Detektor vermessen. Dazu werden Imprägnate aus einem Imprägnierkanal entnommen, die bei verschiedenen Geschwindigkeiten produziert worden waren. Dabei wurden die Geschwindigkeiten um das bekannte Optimum nach oben und unten variiert. Dann wurden die Proben per NIR vermessen und dann im Ofen der VC-Wert bestimmt. Nach fünf Minuten Trocknung ist der ausgehärtete Endzustand (C-Zustand) erreicht. Nach dem Trocknen im Ofen werden die Proben ein zweites Mal mit Hilfe des NIR-Messkopfes vermessen. Diese Messung liefert den Endpunkt der Trocknung.

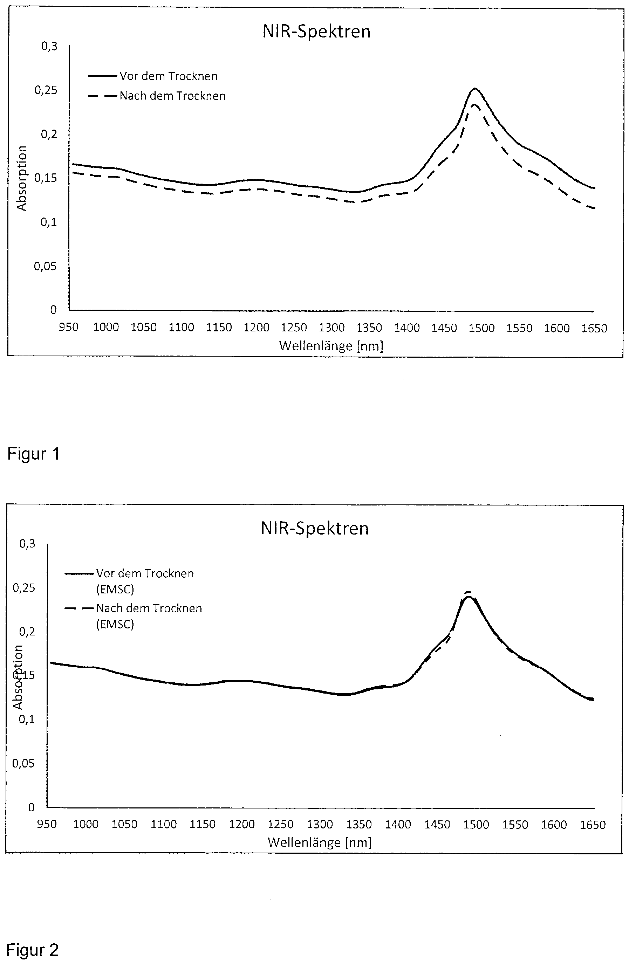

Die aufgenommenen NIR-Spektren (siehe Figur 1) der einzelnen Aufträge zeigen einen ähnlichen Verlauf mit einer breiten Absorptionsbande bei 1490 nm. Diese Bande entspricht der ersten Oberschwingung von N-H-Bindungen des Melamin-Formaldehyd-Harzes. Bei 1450 nm ist eine weitere Bande erkennbar, die der ersten Oberschwingung der O-H-Bindung des Wassers entspricht.

Wegen der Überlappung der genannten Absorptionsbanden erscheint die Wasserbande als linke Schulter der breiten Bande. Den Hauptunterschied in den Spektren stellt die Höhe der Basislinie dar. Die Verschiebung der Basislinie ist auf die unterschiedliche Aushärtung (Dichte, Brechungsindex) der beiden Proben zurückzuführen. So zeigt das Spektrum der Probe nach der Trocknung im Ofen niedrigere Absorptionswerte als vor der Trocknung, weil das eingestrahlte Licht stärker reflektiert bzw. gestreut wird. Dies macht die spektralen Unterschiede auf Grund der chemischen Veränderung der Proben kaum bzw. nicht erkennbar. Die Kompensierung des störenden Streueffektes kann durch verschiedenen Methoden der Datenvorbehandlung erfolgen.

Nach der Korrektur der Basislinienverschiebung (siehe Figur 2) zeigen die Spektren Veränderung der Absorptionsintensität der Banden bei 1450 nm (Wasser) und bei 1490 nm (N-H-Gruppen).

Man kann dann eine Korrelation zwischen den VC-Werten und den NIR-Spektren erstellen. Die Erstellung des Kalibriermodells, das den Zusammenhang zwischen den NIR-Spektren und den dazugehörigen VC-Werten beschreibt, erfolgt mit den multivariaten Regressionsverfahren (z. B. mit MLR PCR, PLS usw.). Die Auswertung wird über das gesamte Spektrum durchgeführt. Je länger die Probe im Ofen getrocknet wird, umso höher ist der Vernetzungsgrad. Es können dabei auch Proben vermessen werden, die einen höheren VC-Wert besitzen als üblicherweise angestrebt. Mit der Prüfung dieser untertrockneten Proben kann auch eine verbesserte Steuerung des Imprägnierkanals (Trockenkanals) erreicht werden. Die untertrockneten Proben haben einen Methylolgruppen-Gehalt, der über dem Optimum liegt, die übertrockneten haben einen Methylolgruppen-Gehalt, der unter dem Optimum liegt. Somit ist durch die Aufnahme der NIR-Spektren in Kombination mit einer Visualisierung eine Steuerung des Kanals anhand des Methylolgruppen-Gehaltes möglich. Mit diesen Daten kann also nach Kalibrierung für die verschiedenen Harz- und Papiersysteme eine grundsätzliche Voraussage über den Zustand der Aushärtung gemacht werden.

Die Prüfungen über den Aushärtungszustand können direkt am Auslauf einer Imprägnieranlage durchgeführt werden. Der NIR-Messkopf liefert in der Minute mehrere hunderte Messwerte, womit eine kontinuierliche Prozessüberwachung möglich ist. Für Qualitätsprüfungen im Lager kann mit einem mobilen Messgerät operiert werden.

Die NIR-Messung der Vernetzung kann direkt an der Produktionslinie (in-Line Messung) mit einem mobilen Gerät (DA 7400 Fa. Perten) oder im Labor (off-Line Messung) mit einem stationären Gerät (DA 7250 Fa. Perten) erfolgen.

### Ausführungsbeispiel 2:

In einem Imprägnierkanal wurde ein Overlay (Papiergewicht: 25 g/m²) wurde mit einem Gemisch aus Melaminharz und Korund imprägniert. Die gesamte Auftragsmenge lag bei ca. 75 g/m², wovon ca. 55 g Melaminharz waren. Der Imprägnierkanal wurde mit verschiedenen Geschwindigkeiten gefahren. Von den einzelnen Geschwindigkeitsvarianten wurden Proben gezogen und mit Hilfe des NIR-Messkopfes vermessen. Anschließend werden sie auf ihren VC-Wert untersucht. Dabei wurden VC-Werte von 3,0 bis 8 % gefunden. Alle Proben werden nach dem Trocknen ein zweites Mal mit dem NIR-Messkopf vermessen.

Aus den Spektren und den VC-Werten wurde anschließend eine Korrelation erstellt, die eine Vorhersage des VC-Wertes an anderen Overlay-Mustern zuließ.

Dieses Verfahren ist selbstverständlich auch bei Systemen einsetzbar, bei denen die vorgehärteten Harze direkt auf bedruckte oder nicht bedruckte Holzwerkstoffplatten aufgebracht werden. Bei diesen Platten stellen sich die gleichen Probleme wie bei imprägnierten Papieren. Auch hier ist es wichtig den Aushärtungszustand des auf der Platte befindlichen Kunstharzes zu kennen. Dies gilt sowohl für eine verkettete Produktionslinie bei der nach dem Harzauftrag und der Trocknung direkt die Weiterverarbeitung in einer KT- oder Conti-Presse erfolgt als auch in einer nicht verketteten Produktion in der nach dem Harzauftrag und der Trocknung eine Zwischenlagerung stattfindet. In dem beschriebenen Fall ist die Bestimmung des Vernetzungszustandes umso wichtiger, da im Gegensatz zu imprägnierten Papieren, eine Qualitätsbestimmung der üblicherweise zu bestimmenden Parameter ansonsten kaum möglich ist. Durch eine direkt an der Produktionslinie durchgeführte Messung, kann bei Abweichungen vom Sollzustand unverzüglich eine Anpassung der Produktionsparameter vorgenommen werden. Dabei kann es sich um den Vorschub und die Trocknereinstellung (Lufttemperatur, Luftgeschwindigkeit und Luftführung). Letztlich besteht die Möglichkeit die Steuerung der Trockner über den Aushärtungszustand des Kunstharzes zu steuern.

## Patentansprüche

1. Verfahren zur Bestimmung des Vernetzungsgrades von mindestens einer auf einem Trägermaterial vorgesehenen Harzschicht aus einem wärmehärtbaren Formaldehyd-Harz, wobei die mindestens eine vorgehärtete Formaldehyd-Harzschicht in einem vorgehärteten Zustand auf der Oberfläche einer Trägerplatte oder als Teil- oder Vollimprägnat einer Papierlage vorliegt,
umfassend die Schritte
- Aufnehmen von mindestens einem NIR-Spektrum der auf dem mindestens einem Trägermaterial vorgesehenen vorgehärteten Formaldehyd-Harzschicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Vernetzungsgrades der mindestens einen vorgehärteten Formaldehyd-Harzschicht durch Vergleich des für die mindestens eine vorgehärtete Formaldehyd-Harzschicht ermittelten NIR-Spektrums mit mindestens einem für mindestens eine Referenzprobe der mindestens einen Formaldehyd-Harzschicht mit bekanntem Vernetzungsgrades ermittelten NIR-Spektrums mittels einer multivarianten Datenanalyse (MDA), wobei die multivariate Datenanalyse über den gesamten Spektralbereich des ermittelten NIR-Spektrums durchgeführt wird,
wobei das mindestens eine für die mindestens eine Referenzprobe mit einer vorgehärteten Formaldehyd-Harzschicht mit bekannten Vernetzungsgrad ermittelte NIR-Spektrum unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** der Vernetzungsgrad der auf der Papierlage oder Trägerplatte vorgesehenen vorgehärteten Formaldehyd-Harzschicht einem Harz entspricht, dessen Aushärtung im Zustand einer unvollständigen Polymerisierung unterbrochen wurde (B-Zustand).

3. Verfahren nach einem der Ansprüche 1 oder 2 , **dadurch gekennzeichnet, dass** die mindestens eine Trägerplatte eine Holzwerkstoffplatte, insbesondere eine mitteldichte Faser (MDF)-, hochdichte Faser (HDF)- oder Grobspan (OSB)- oder Sperrholzplatte ist, eine Zementfaserplatte und/oder Gipsfaserplatte, eine Magnesiumoxid-Platte, eine Holz-Kunststoff-Platte (WPC) und/oder eine Kunststoffplatte ist.

4. Verfahren nach einem der Ansprüche 1 oder 2, **dadurch gekennzeichnet, dass** die Papierlage eine Overlaypapierlage, Kraftpapierlage oder Dekorpapierlage ist.

5. Verfahren nach einem der vorhergehenden Ansprüche, **dadurch gekennzeichnet, dass** die vorgehärtete Formaldehyd-Harzschicht als Flüssigoverlay auf der Trägerplatte vorliegt.

6. Verfahren nach Anspruch 5, **dadurch gekennzeichnet, dass** die mindestens eine auf der Trägerplatte als Overlay vorgesehene vorgehärtete Formaldehyd-Harzschicht eine Dicke zwischen 10 und 150 µm, bevorzugt zwischen 20 und 100 µm, insbesondere bevorzugt zwischen 30 und 80 µm aufweist.

7. Verfahren nach einem der vorhergehenden Ansprüchee, **dadurch gekennzeichnet, dass** das wärmehärtbare Harz ein Melamin-Formaldehyd-Harz, eine Melamin-Harnstoff-Formaldehyd-Harz oder ein Harnstoff-Formaldehyd-Harz umfasst.

8. Verfahren nach einem der vorhergehenden Ansprüche, **dadurch gekennzeichnet, dass** die Referenzprobe mit bekanntem Vernetzungsgrad der vorgehärteten Formaldehyd-Harzschicht eine auf einer Papierlage oder Trägerplatte vorgesehene Formaldehyd-Harzschicht umfasst, wobei Papierlage oder Trägerplatte und Formaldehyd-Harzschicht der Referenzprobe gleichartig zu der zu vermessenden Probe aus Papierlage oder Trägerplatte und Formaldehyd-Harzschicht sind.

9. Verfahren nach einem der vorhergehenden Ansprüche, **dadurch gekennzeichnet, dass** der Vernetzungsgrad der vorgehärteten Formaldehyd-Harzschicht der mindestens einen Referenzprobe nach dem Vorhärten der Formaldehyd-Harzschicht anhand von mindestens einer der vorgehärteten Referenzprobe entnommenen Einzelprobe bestimmt wurde.

10. Verfahren nach Anspruch 9, **dadurch gekennzeichnet, dass** der Vernetzungsgrad der vorgehärteten Formaldehyd-Harzschicht der Referenzprobe anhand von mindestens einer, bevorzugt mindestens zwei, drei, vier oder mehreren, der Referenzproben entnommenen Einzelproben gemäß dem VC-Test bestimmt wird.

11. Verfahren nach einem der vorhergehenden Ansprüche, **dadurch gekennzeichnet, dass** der Vernetzungsgrad der mindestens einen vorgehärteten Formaldehyd-Harzschicht innerhalb und/oder außerhalb einer Produktionslinie des mit der vorgehärteten Formaldehyd-Harzschicht versehenen Trägermaterials bestimmt wird.

## Claims

1. Method for the determination of the degree of crosslinking of at least one resin layer made of a heat-curable formaldehyde resin provided on a supportive material, where the at least one pre-cured formaldehyde resin layer is present in a pre-cured state on the surface of a supportive sheet or takes the form of partial or complete impregnate of a paper sublayer,
comprising the steps of:
- recording of at least one NIR spectrum of the pre-cured formaldehyde resin layer provided on the at least one supportive material with use of at least one NIR detector in a wavelength range from 500 nm to 2500 nm, preferably from 700 nm to 2000 nm, with particular preference from 900 nm to 1700 nm;
- determination of the degree of crosslinking of the at least one pre-cured formaldehyde resin layer via comparison, by means of multivariant data analysis (MDA), of the NIR spectrum determined for the at least one pre-cured formaldehyde resin layer with at least one NIR spectrum determined for at least one reference sample of the at least one formaldehyde resin layer with known degree of crosslinking, where the multivariant data analysis is carried out across the entire spectral range of the NIR spectrum determined;
where the at least one NIR spectrum determined for the at least one reference sample with a pre-cured formaldehyde resin layer with known degree of crosslinking was determined in advance with use of the same NIR detector in a wavelength range from 500 nm to 2500 nm, preferably from 700 nm to 2000 nm, with particular preference from 900 nm to 1700 nm.

2. Method according to Claim 1, **characterized in that** the degree of crosslinking of the pre-cured formaldehyde resin layer provided on the paper sublayer or supportive sheet is indicative of a resin whose hardening has been interrupted in the state of incomplete polymerization (B-state).

3. Method according to Claim 1 or 2, **characterized in that** the at least one supportive sheet is a wood-composite board, in particular a medium-density fibreboard (MDF), high-density fibreboard (HDF), or oriented strand board (OSB), or plywood board, a cement fibreboard or gypsum fibreboard, a magnesium oxide board, a wood-plastic board (WPC) and/or a plastics board.

4. Method according to Claim 1 or 2, **characterized in that** the paper sublayer is an overlay paper sublayer, kraft paper sublayer or decorative paper sublayer.

5. Method according to any of the preceding claims, **characterized in that** the pre-cured formaldehyde resin layer takes the form of liquid overlay on the supportive sheet.

6. Method according to Claim 5, **characterized in that** the thickness of the pre-cured formaldehyde resin layer provided in the form of overlay on the supportive sheet is from 10 to 150 µm, preferably from 20 to 100 µm, with particular preference from 30 to 80 µm.

7. Method according to any of the preceding claims, **characterized in that** the heat-curable resin comprises a melamine-formaldehyde resin, a melamine-urea-formaldehyde resin or a urea-formaldehyde resin.

8. Method according to any of the preceding claims, **characterized in that** the reference sample with known degree of crosslinking of the pre-cured formaldehyde resin layer comprises a formaldehyde resin layer provided on a paper sublayer or provided on a supportive sheet, where paper sublayer or supportive sheet and formaldehyde resin layer of the reference sample are similar to those of the test sample made of paper sublayer or supportive sheet and formaldehyde resin layer.

9. Method according to any of the preceding claims, **characterized in that** the degree of crosslinking of the pre-cured formaldehyde resin layer of the at least one reference sample has been determined after the pre-curing of the formaldehyde resin layer on the basis of at least one individual sample taken from the pre-cured reference sample.

10. Method according to Claim 9, **characterized in that** the degree of crosslinking of the pre-cured formaldehyde resin layer of the reference sample is determined by the VC test on the basis of at least one, preferably at least two, three, four, or more, individual samples taken from the reference samples.

11. Method according to any of the preceding claims, **characterized in that** the degree of crosslinking of the at least one pre-cured formaldehyde resin is determined within and/or outside of a production line of the supportive material provided with the pre-cured formaldehyde resin layer.

## Revendications

1. Procédé servant à déterminer le degré de réticulation d'au moins une couche de résine prévue sur un matériau de support, composée d'une résine formaldéhyde thermodurcissable, dans lequel l'au moins une couche de résine formaldéhyde préalablement durcie est présente dans un état préalablement durci sur la surface d'un panneau de support ou sous la forme d'un produit d'imprégnation partielle ou totale d'une feuille de papier,
comprenant les étapes
- de relevé d'au moins un spectre NIR de la couche de résine formaldéhyde préalablement durcie prévue sur l'au moins un matériau de support en utilisant un détecteur NIR dans une plage de longueurs d'ondes comprise entre 500 nm et 2500 nm, de manière préférée comprise entre 700 nm et 2000 nm, en particulier de manière préférée comprise entre 900 nm et 1700 nm ;
- de définition du degré de réticulation de l'au moins une couche de résine formaldéhyde préalablement durcie en comparant le spectre NIR déterminé pour l'au moins une couche de résine formaldéhyde préalablement durcie à au moins un spectre NIR déterminé pour au moins un échantillon de référence de l'au moins une couche de résine formaldéhyde présentant un degré de réticulation connu au moyen d'une analyse de données multivariante (MDA), où l'analyse de données multivariante est effectuée sur l'ensemble de la plage spectrale du spectre NIR déterminé,
dans lequel l'au moins un spectre NIR déterminé pour l'au moins un échantillon de référence avec une couche de résine formaldéhyde préalablement durcie présentant un degré de réticulation connu a été défini au préalable en utilisant le même détecteur NIR dans une plage de longueurs d'ondes comprise entre 500 nm et 2500 nm, de manière préférée comprise entre 700 nm et 2000 nm, en particulier de manière préférée comprise entre 900 nm et 1700 nm.

2. Procédé selon la revendication 1, **caractérisé en ce que** le degré de réticulation de la couche de résine formaldéhyde préalablement durcie prévue sur la feuille de papier ou le panneau de support correspond à une résine, dont le durcissement a été interrompu dans l'état d'une polymérisation non complétée (état B).

3. Procédé selon l'une quelconque des revendications 1 ou 2, **caractérisé en ce que** l'au moins un panneau de support est un panneau en matériau dérivé du bois, en particulier un panneau de fibres moyenne densité (MDF), un panneau de fibres haute densité (HDF) ou un panneau de grandes particules orientées (OSB) ou un panneau de contreplaqué, un panneau en ciment renforcé par des fibres et/ou un panneau de plâtre renforcé par des fibres, un panneau en oxyde de magnésium, un panneau composite en bois et en plastique (WPC) et/ou un panneau en plastique.

4. Procédé selon l'une quelconque des revendications 1 ou 2, **caractérisé en ce que** la feuille de papier est une feuille de papier overlay, une feuille de papier kraft ou une feuille de papier décoratif.

5. Procédé selon l'une quelconque des revendications précédentes, **caractérisé en ce que** la couche de résine formaldéhyde préalablement durcie est présente sur le panneau de support sous la forme d'un overlay liquide.

6. Procédé selon la revendication 5, **caractérisé en ce que** l'au moins une couche de résine formaldéhyde préalablement durcie prévue sur le panneau de support sous la forme d'un overlay présente une épaisseur comprise entre 10 et 150 µm, de manière préférée comprise entre 20 et 100 µm, en particulier de manière préférée comprise entre 30 et 80 µm.

7. Procédé selon l'une quelconque des revendications précédentes, **caractérisé en ce que** la résine thermodurcissable comprend une résine mélamine-formaldéhyde, une résine mélamine-urée-formaldéhyde ou une résine urée-formaldéhyde.

8. Procédé selon l'une quelconque des revendications précédentes, **caractérisé en ce que** l'échantillon de référence présentant un degré de réticulation connu de la couche de résine formaldéhyde préalablement durcie comprend une couche de résine formaldéhyde prévue sur une feuille de papier ou un panneau de support, dans lequel la feuille de papier ou le panneau de support et la couche de résine formaldéhyde de l'échantillon de référence sont similaires à l'échantillon à mesurer composé de la feuille de papier ou du panneau de support et de la couche de résine formaldéhyde.

9. Procédé selon l'une quelconque des revendications précédentes, **caractérisé en ce que** le degré de réticulation de la couche de résine formaldéhyde préalablement durcie de l'au moins un échantillon de référence a été défini après le durcissement préalable de la couche de résine formaldéhyde à l'aide d'au moins un échantillon individuel prélevé de l'échantillon de référence préalablement durci.

10. Procédé selon la revendication 9, **caractérisé en ce que** le degré de réticulation de la couche résine formaldéhyde préalablement durcie de l'échantillon de référence a été défini à l'aide d'au moins un, de manière préférée d'au moins deux, trois, quatre ou plusieurs, échantillons individuels prélevés des échantillons de référence selon le test VC.

11. Procédé selon l'une quelconque des revendications précédentes, **caractérisé en ce que** le degré de réticulation de l'au moins une couche de résine formaldéhyde préalablement durcie est défini à l'intérieur et/ou à l'extérieur d'une ligne de production du matériau de support pourvu de la couche de résine formaldéhyde préalablement durcie.
